# EUROPÄISCHE PATENTSCHRIFT

(11) **EP 2 924 526 B1**
(45) Veröffentlichungstag und Bekanntmachung des Hinweises auf die Patenterteilung: **13.06.2018**
(21) Anmeldenummer: 15153489.8
(22) Anmeldetag: 02.02.2015
(51) Int. Cl.: B23Q 17/09, G05B 19/4065

(54) **VERFAHREN ZUR EINRICHTUNG UND/ODER ÜBERWACHUNG VON BETRIEBSPARAMETERN EINER WERKSTÜCKBEARBEITUNGSMASCHINE**
METHOD FOR SETTING UP AND/OR MONITORING OPERATING PARAMETERS OF A WORKPIECE PROCESSING MACHINE
PROCÉDÉ DESTINÉ AU RÉGLAGE ET/OU À LA SURVEILLANCE DE PARAMÈTRES DE FONCTIONNEMENT D'UNE MACHINE D'USINAGE DE PIÈCES

(30) Priorität: 11.03.2014 DE 102014103240
(43) Veröffentlichungstag der Anmeldung: 30.09.2015
(73) Patentinhaber: Pro-micron GmbH & Co. KG, 87600 Kaufbeuren (DE)
(72) Erfinder: Wunderlich, Rainer, Dr., 87600 Kaufbeuren (DE); Lang, Martin, 82405 Wessobrunn (DE); Carré, Lionel, 87637 Seeg (DE)
(74) Vertreter: Raffay & Fleck

(56) Entgegenhaltungen:
- WO-A1-2008/142386
- DE-A1-102008 064 391
- US-A- 4 713 770

## Beschreibung

Die Erfindung betrifft ein Verfahren zur Einrichtung und/oder Überwachung von Betriebsparametern einer Werkstückbearbeitungsmaschine.

In modernen Herstellungsverfahren werden insbesondere für die Serienfertigung Werkstückbearbeitungsmaschinen für die Bearbeitung eines Werkstückes mit einem bestimmten Bearbeitungsschritt zunächst eingerichtet und nach erfolgreicher Einrichtung in dem hinsichtlich der Betriebsparameter eingestellten Verarbeitungsablauf fortwährend wiederkehrend verwendet zur Bearbeitung einer Vielzahl gleichartiger und gleichartig zu behandelnder Werkstückes der Fertigungsserie mit dem eingerüsteten Bearbeitungsschritt. Dies gilt im Besonderen auch für zerspanende Werkstückbearbeitungsmaschinen, für die die vorliegende Erfindung im Besonderen gedacht ist. Hierunter fallen insbesondere Maschinen, die eine Bohr- oder Fräsbearbeitung eines Werkstückes durchführen, im Falle der Fräsbearbeitung sowohl ein Tiefenfräsen als auch ein Linien- oder Flächenfräsen oder dergleichen. Es fallen aber auch Drehmaschinen unter diese Kategorie von zerspanenden Werkstückbearbeitungsmaschinen.

Soll für derartige Bearbeitungsmaschinen ein neuer Prozess eingerichtet werden, um beispielsweise eine Bearbeitungsmaschine erstmals in die Fertigung eines bestimmten Teils einzubeziehen, so erfolgt zunächst eine Einrichtung der Maschine hinsichtlich der Betriebsparameter, was neben der Auswahl eines geeigneten Werkzeuges insbesondere die Parametrierung der einstellbaren Maschinenwerte und Parameter betrifft, wie z.B. Rotationsgeschwindigkeit eines rotierenden Werkzeughalters, in dem ein ausgewähltes Werkzeug verdrehfest gehalten ist, und Vorschubgeschwindigkeiten des Werkzeuges relativ zum Werkstück in den möglichen Arbeitsrichtungen, z.B. in axialer Richtung in Bezug auf die Rotationsachse des rotierbar angetriebenen Werkzeughalters oder auch in Richtungen senkrecht zu dieser Achse. Bei Drehmaschinen sind diese Parameter neben der Auswahl des Werkzeuges an sich vor allem die Drehzahl der Werkstückspindel und Vorschubgeschwindigkeit zwischen Werkzeug und Werkstück. Die Vorgabe entsprechender Parameter erfolgt dabei selbstverständlich nach den durch den durchzuführenden Bearbeitungsschritt, z.B. die vorbestimmte Formgebung, gesetzten Anforderungen, also z.B. anhand der Form und des Verlaufes einer einzubringenden Frässpur oder aber der Verlaufsrichtung und Tiefe einer anzubringenden Bohrung oder der Form der durch Drehen zu fertigenden Oberfläche. Zugleich wird bei einer entsprechenden Parametrierung aber auch Rücksicht genommen auf weitere Einzelheiten und Randbedingungen wie die Bearbeitungsdauer und damit den Durchsatz der Bearbeitungsmaschine, aber auch die Vermeidung übermäßig hoher Belastungen des Materials des Werkstückes, die sich z.B. aus zu schnellen Vorschubgeschwindigkeiten bei einer zerspanenden Bearbeitung ergeben können. Die entsprechende Parametrierung und Einrichtung der Werkstückbearbeitungsmaschinen ist derzeit vor allem der Erfahrung und dem fachlichen Können eines entsprechenden Maschinenführers überlassen, der anhand seiner entsprechenden Kenntnisse, allgemeiner Angaben des Herstellers des verwendeten Werkzeuges und unter Zuhilfenahme von Anfahrversuchen die entsprechende Einrichtung und Parametrierung vornimmt.

Des Weiteren wird bei einer erstmaligen Einrichtung eines Bearbeitungsprozesses auf einer Werkstückbearbeitungsmaschine regelmäßig auch der Werkzeugverschleiß beobachtet, um insbesondere Zyklen festzulegen, innerhalb derer Werkzeuge auszutauschen sind. Denn über eine bestimmte Grenze hinaus verschlissene Werkzeuge wie z.B. Bohrer, Dreh- oder Fräswerkzeuge führen einerseits zu verschlechterten Bearbeitungsergebnissen hinsichtlich der Bearbeitungsgenauigkeit, bedingen aber andererseits auch einen möglichen Totalverlust des kostspieligen Werkzeuges, wenn beispielsweise Frässchneiden über ein Maß hinaus verschlissen sind, bis zu welchem noch ein Nachschärfen des entsprechenden Fräswerkzeuges möglich gewesen wäre. In diesem Zusammenhang werden heute typischerweise bei der Einrichtung entsprechender Werkstückbearbeitungsmaschinen Versuchsreihen mit Bearbeitungszyklen und einem Probewerkzeug gefahren, und es wird die Abnutzung des Probewerkzeuges nach Bearbeitung einer vorgegebenen Anzahl von Werkstücken beobachtet, typischerweise durch optische Begutachtung z.B. unter dem Mikroskop zum Teil mit einer Vermessung der durch den Verschleiß veränderten Schneidkantengeometrie. Ausgehend von diesen Verschleißbeobachtungen erfolgen dann Hochrechnungen auf die zulässigen Durchsätze mit einem Werkzeug, bevor dieses über ein akzeptables Maß hinaus verschlissen ist, und somit die Festlegung der für diesen Bearbeitungsprozess zulässigen Standzeit eines Werkzeuges, bevor dieses auszutauschen ist.

Aber auch im Zuge der nach Einrichtung der Bearbeitungsmaschine für eine Serienfertigung durchgeführten Fertigungsabläufe ist es wünschenswert, den Bearbeitungsprozess und die Betriebsparameter der Werkstückbearbeitungsmaschine unter Beobachtung zu halten, zumindest mit stichprobenartigen Bestandsanalysen. Hierbei ist es insbesondere von Interesse, nachzuhalten, inwieweit der hinsichtlich der Betriebsparameter eingerichtete Bearbeitungsprozess weiterhin stabil abläuft, insoweit hinsichtlich des Bearbeitungsergebnisses zu einem Ausstoß gleichbleibend bearbeiteter und hinsichtlich der Toleranzen und Bearbeitungsqualitäten gleicher Werkstücke führt. Zugleich ist weiterhin bei einer derartigen Beobachtung von Interesse festzustellen, ob nicht ggf. ein Werkzeug trotz einer vorgegebenen Standzeit frühzeitig verschlissen oder aber sogar beschädigt ist (z.B. ein Schneidenbruch bei einem Fräs- oder Drehwerkzeug oder dgl.). Auch ist es grundsätzlich wünschenswert, sonstige Anomalien im Ablauf der Bearbeitungsmaschine festzustellen, wie z.B. Veränderungen an der Maschine selbst (z.B. ausgeschlagene Lager, Zunahme eines ungewünschten seitlichen Spiels in Linearführungen oder dgl.). Schließlich ist es auch von Interesse, möglicherweise auftretende Fehler im Bearbeitungsprozess erkennen zu können, wie z.B. einen Spanstau durch verklemmte Bohrspäne in einem Bohrer oder dgl., da derartige Vorkommnisse ebenfalls einen nachteiligen Einfluss auf den Bearbeitungsprozess haben können und zudem auch eine Gefährdung für das wertvolle Werkzeug darstellen können.

Für einen Teil der oben erwähnten Beobachtungen werden im heutigen Einsatz von Bearbeitungsmaschinen häufig die Motorströme von Antriebsmotoren, z.B. eines Antriebsmotors für den rotatorischen Antrieb des Werkzeughalters oder eines Werkstückhalter (z.B. einer Drehspindel) überwacht und aus entsprechenden Stromaufnahmen auf auftretende Drehmomente oder sonstige Kräfte rückgeschlossen. Steigt dabei der Motorstrom in einer unerwarteten und von der Norm abweichenden Weise an, so werden hier Probleme vermutet, die einer näheren Analyse bedürfen. Das Problem bei dieser Vorgehensweise ist jedoch die vergleichsweise undifferenzierte Information, die sich aus der bloßen Überwachung des Motorstromes ergibt. Durch entsprechenden Anstieg des Motorstromes kann der Maschinenführer noch nicht auf die konkrete Ursache des Phänomens schließen, ist in der Regel zunächst eine eingehende Untersuchung des aktuellen Zustandes der Bearbeitungsmaschine und der Parametrierung erforderlich, was zu Ausfallzeiten und damit wirtschaftlichen Verlusten führt. Auch ist die Motorstrommessung bei kleinen Werkzeugen und/oder geringen Bearbeitungskräften zu ungenau. Am Werkzeug auftretende Biegemomente können über Motorströme gar nicht erfasst werden.

Eine Werkstückbearbeitungsmaschine, hier mit rotatorisch antreibbarem Werkzeug, für die die Erfindung ebenfalls vorteilbringend zum Einsatz kommen kann, ist aber auch eine Rührreibschweißmaschine. Auch bei dieser ist für eine entsprechende Fertigung, insbesondere eine Serienfertigung, eine Parametrierung vorzunehmen und ist es wünschenswert, den Prozess im laufenden Betrieb zumindest stichprobenartig zu überwachen, um eine gleichbleibende Qualität der mit dieser Vorrichtung und Maschine hergestellten Schweißnähte sicherzustellen. Bei der Einrichtung treten hier gleichartige Fragen auf, nämlich eine Parametrierung der Maschine für den entsprechenden Bearbeitungsvorgang nach den Vorgaben einer möglichst schnellen Bearbeitung (einem hohen Durchsatz) auf der einen Seite, auf der anderen Seite aber mit entsprechender Schonung der Werkstücke und nach Möglichkeit auch des Werkzeuges.

Gleichermaßen kann die Erfindung auch in einer Reibschweißmaschine zum Einsatz kommen, wobei hier ein mittels des Reibschweißverfahrens an einem Werkstück anzubringendes zusätzliches Element, beispielsweise ein Anschweißbolzen, als "Werkzeug" zu sehen ist, welches rotatorisch angetrieben wird. Hier also ist der Werkzeughalter, wie er in der erfindungsgemäßen Werkstückbearbeitungsmaschine enthalten ist, als eine rotatorisch antreibbare Spindel aufzufassen, die ein anzuschweißendes Element, beispielsweise einen im Reibschweißverfahren anzuschweißenden Bolzen, aufnimmt.

Im Stand der Technik sind der Erfindung ähnliche Verfahren bekannt. So beschreibt die DE 10 2008 064 391 A1 ein maschinendiagnostizierendes Verfahren bei der ein Drehmoment und auch Biegemomente eines Triebkörpers erfasst und für den Betrieb der Maschine ausgewertet werden. Ferner beschreibt die WO 2008/142386 A1 eine Überwachung einer Maschinenbearbeitung, bei der die Axialkraft erfasst und ausgewertet wird.

Wie vorstehend geschildert, besteht im Stand der Technik das Problem, dass sowohl bei der Einrichtung als auch bei der Überwachung der entsprechenden Betriebsparameter einer Werkstückbearbeitungsmaschine mit einem Werkzeughalter Aussagen über die bei entsprechender Parametrierung auftretenden Kräfte und Momente allenfalls mittelbar gemacht werden können, so dass bei der entsprechenden Einrichtung und/oder Überwachung bisher weitgehend ausschließlich auf die entsprechende Erfahrung des Maschinenführers zurückgegriffen wurde, der sich entsprechender Hilfsmittel, wie z.B. der Messung und Überwachung der Stromaufnahme der Antriebsmotoren, bedienen konnte. Dies führt insbesondere dazu, dass bei der Einrichtung der Betriebsparameter häufig noch nicht das Optimum einer entsprechenden Parametrierung im Hinblick auf die verschiedenen Randbedingungen wie insbesondere schonende Bearbeitung des Werkstückes, hohe Eingriffszeiten und damit kurze Bearbeitungszeiten und Schonung des Werkzeuges erreicht worden sind bzw. erreicht werden können. Auch im Hinblick auf die Genauigkeit der Überwachung der Betriebsparameter, z.B. hinsichtlich eines Werkzeugverschleißes, oder des Erkennens bestimmter Fehler und Anomalien im Bearbeitungsprozess sind die bekannten Verfahren noch vergleichsweise ungenau. Diese Problematik besteht insbesondere bei jedenfalls um eine Rotationsachse rotatorisch antreibbaren Werkzeughaltern, da bei diesen eine Überwachung von mit enstprechenden Messaufnehmern oder -sensoren erfassten Messwerten häufig problematisch ist.

Mithin ist es Aufgabe der vorliegenden Erfindung, hier eine Vorgehensweise anzugeben, die eine genauere Analyse der Betriebszustände für eine im Hinblick auf einen optimalen Betrieb verbesserte Einrichtung der Werkstückbearbeitungsmaschine und ihrer Betriebsparameter ermöglicht, bzw. die eine genauere und bessere Überwachung des Bearbeitungsprozesses z.B. hinsichtlich eines Zustandes des Werkzeuges oder auch im Hinblick auf das Erkennen bestimmter Anomalien oder Ausfälle bzw. Veränderungen im System der Werkstückbearbeitungsmaschine und des genutzten Werkzeuges erkennen lassen.

Diese Aufgabe wird erfindungsgemäß gelöst durch ein Verfahren zur Einrichtung und/oder Überwachung von Betriebsparametern einer Werkstückbearbeitungsmaschine mit den Merkmalen des Patentanspruches 1. Vorteilhafte Weiterbildungen des erfindungsgemäßen Verfahrens sind in den abhängigen Ansprüchen 2 bis 15 angegeben.

Das erfindungsgemäße Verfahren zur Einrichtung und/oder Überwachung von Betriebsparametern einer Werkstückbearbeitungsmaschine bezieht sich zunächst auf eine solche Werkstückbearbeitungsmaschine, die einen Werkzeughalter sowie Mittel zum relativen Bewegen eines Werkstückes und des Werkzeughalters zueinander jedenfalls in Richtung einer ersten Achse aufweist. Dabei kann mit den vorstehend genannten Mitteln sowohl gemeint sein, dass der Werkzeughalter in einer Richtung parallel zu der ersten Achse linear verfahrbar, das Werkstück in dieser Richtung feststehend ist. Gleichermaßen können diese Mittel aber auch so umgesetzt sein, dass der Werkzeughalter relativ zu der Bearbeitungsmaschine entsprechend ruht und eine Werkstückaufnahme mit dem darin aufgenommenen Werkstück in dieser Richtung relativ zum Werkzeughalter verfahrbar ist, oder auch Kombinationen dieser beiden Möglichkeiten, in denen beide Elemente, Werkzeughalter und Werkstück aktiv bewegt werden.

Bei dem erfindungsgemäßen Verfahren werden im Bearbeitungsbetrieb des mit einem Werkzeug bestückten Werkzeughalters und im Angriff des Werkzeuges an einem Werkstück Werte für wenigstens eine der folgenden bei Interaktion zwischen dem Werkzeug und dem Werkstück am Werkzeug auftretenden und auf den Werkzeughalter übertragenen Messgrößen am Werkzeughalter erfasst und für den Ablauf der Bearbeitung aufgezeichnet:
a. eine in Richtung parallel zu der ersten Achse wirkende Axialkraft.

Diese Erfassung der Werte erfolgt dabei insbesondere durch entsprechende Messsensoren an dem Werkzeughalter, z.B. Dehnungsmessstreifen, DMS, oder aber auch SAW-Sensoren oder dgl. Hierbei kann als Werkzeughalter sowohl eine mit entsprechender Messsensorik ausgerüsteter Werkzeughalterung bzw. eine Werkzeugaufnahme der Bearbeitungsmaschine selbst, aber ebenso gut auch ein in eine Werkzeughalterung der Werkstückbearbeitungsmaschine eingesetztes Zwischenstück dienen, welches in der Werkzeughalterung der Bearbeitungsmaschine eingespannt wird und welches wiederum eine Werkzeugaufnahme zum drehfesten und starren Festlegen des Werkzeuges, den eigentlichen Werkzeughalter, aufweist. Der Werkzeughalter kann insbesondere auch rotatorisch um eine zu der ersten Achse parallelen oder mit dieser zusammenfallenden Rotationsachse antreibbar gebildet sein. Dann ist ein solches Zwischenstück mit der Werkzeughalterung der Bearbeitungsmaschine rotationsfest in Bezug auf die Rotationsachse verbunden und wird entsprechend rotierend angetrieben. Mit anderen Worten kann der erfindungsgemäß vorzusehende Werkzeughalter auch durch ein als Adapterstück ausgebildetes Element realisiert sein, wobei ein solches Adapterstück dann insbesondere die Messsensorik der oben geschilderten Art aufweist.

Das Besondere bei dem erfindungsgemäßen Verfahren ist nun, dass bei rotatorisch antreibbaren Werkzeughaltern im Hinblick auf die Erfassung der Werte für die Messgrößen der Biegemomente bzw. Biegemomentkomponenten diese Werte aufgelöst nach Richtung und Betrag in einer Ebene senkrecht zu der ersten Achse gemessen und dann in einer entsprechenden Koordinatendarstellung wiedergegeben und ausgewertet werden. Dies kann z.B. durch eine Aufzeichnung nach Betrag und relativen Winkel zu einer vorgegebenen Bezugsrichtung, die insbesondere ortsfest in Bezug auf den (ggf. rotierenden) Werkzeughalter ist, geschehen. Es ist ebenso möglich diese Messung durchzuführen nach den Richtungskomponenten des Biegemomentes in zwei zueinander senkrecht stehenden, in einer zu der Rotationsachse senkrechten, mit einem (ggf. rotierenden) Werkzeughalter ortsfest korrelierte (ggf. mitdrehenden) Ebene liegenden, relativ zu dem Werkzeughalter ortsfest bestimmten Richtungen, von denen eine als "x-Richtung", eine zweite als "y-Richtung" aufgefasst werden können. Dabei wird dann für die Auswertung ein Auftrag einer Vielzahl von jeweils aus zu einem vorgegebenen Messzeitpunkt t erfassten Werten der Biegemomente bzw. Biegemomentkomponenten in x-Richtung und in y-Richtung gebildeten Wertepaaren in einem zweidimensionalen, rechtwinkligen Koordinatendiagramm aufgetragen, bei denen die für die Biegemomente bzw. Biegemomentkomponenten in x-Richtung aufgenommenen Werte entlang einer ersten Koordinatenachse, die Werte in y-Richtung entlang einer zweiten Koordinatenachse aufgetragen sind und die entsprechenden Wertepaare Darstellungspunkte in diesem Koordinatendiagramm bilden. Bei einer derartigen Wiedergabe ergeben sich dann eine Vielzahl entsprechender Punkte in dem Koordinatendiagramm, die letztlich nach Ablauf einer gewissen Zeitspanne eine Art Punkt- oder Datenwolke ergeben. Da das Koordinatensystem, nach dem die Biegemomente bzw. die Biegemomentkomponenten hinsichtlich ihres Wertes erfasst werden, zum Werkzeughalter feststehend ist, ergibt sich, wenn auch die Richtung der auftretenden Biegemomente durch entsprechende Vergabe eines Vorzeichens mit berücksichtigt wird (positiv für eine erste Richtung und negativ für die entgegengesetzte Richtung) in dem Koordinatensystem ein mit der Werkzeugkontur korreliertes Abbild. Wird z.B. ein in einem rotierenden Werkzeughalter festgelegtes, vierschneidiges Fräswerkzeug verwendet, so treten an den Schneidkanten, wenn diese mit dem Werkstück in Eingriff geraten, höhere Biegemomente auf, bei Vorbeistreichen der abfallenden Flanken rückwärtig der Schneidkanten ein entsprechend verringertes Biegemoment. Dies führt zu einem Abbild der entsprechenden in diesem Beispiel als in der Zahl vier vorliegend angegebenen Schneidkanten in der oben erläuterten Darstellung. Je nach Beanspruchung des Werkzeuges ergibt sich dann eine entsprechende "Verzerrung" dieses Abbildes mit einer höheren Ausdehnung und Erstreckung in dem Koordinatendiagramm bei höheren Biegemomentbeanspruchungen und einer entsprechend zusammengezogenen bzw. zusammengestauchten Darstellung bei geringeren Biegemomentbeanspruchungen. Darüber hinaus ist bei einem typischerweise symmetrisch gebildet gewählten Werkzeug das Abbild in einer solchen Darstellung klassischerweise ebenfalls symmetrisch, lassen sich aus auftretenden Asymmetrien Rückschlüsse ziehen auf z.B. ungleichmäßigen Verschleiß der Werkzeugschneiden, einen Schneidenbruch, eine möglicherweise nicht exakt gerade Einspannung des Werkzeuges und dgl.

Neben den Werten für die Messgrößen Biegemomente oder Biegemomentkomponenten nach Richtung und Betrag können insbesondere auch die Werte für folgende Messgrößen erfasst und aufgezeichnet werden:
b. ein in Bezug auf die erste Achse oder eine parallel zu der ersten Achse liegende Achse anliegendes Drehmoment,
c. Biegemomente bzw. Biegemomentkomponenten nach Richtung und Betrag.

Wenn der Werkzeughalter, wie dies in einer möglichen Weiterbildung vorgesehen ist, um eine Rotationsachse rotatorisch antreibbar ist, so liegt diese parallel zu der ersten Achse und wird - sofern diese berücksichtigt wird - als Messgröße gemäß Punkt b. der obigen Aufzählung das in Bezug auf die Rotationsachse anliegende Drehmoment betrachtet.

Erfindungsgemäß werden die ermittelten Werte für die wenigstens eine Messgröße verwendet, um eine im Hinblick auf eine verlängerte Standzeit des verwendeten Werkzeuges bei gleichzeitig eine Maximalbearbeitungszeit unterschreitender Bearbeitungszeit abgestimmte Einrichtung der Betriebsparameter vorzunehmen und/oder um den Bearbeitungsprozess im Hinblick auf eine Reproduzierbarkeit desselben und/oder einen Werkzeugverschleiß und/oder einen Maschinenfehler der Werkstückbearbeitungsmaschine zu überwachen.

Das erfindungsgemäße Verfahren sieht also vor, dass am Werkzeughalter selbst durch eine entsprechende Reaktionskraft des Werkzeuges bei einer Bearbeitung des Werkstückes auftretende Kräfte und/oder Momente gemessen und für eine Auswertung und darauf basierende Einrichtung und/oder Überwachung der Betriebsparameter der Werkstückbearbeitungsmaschine für einen Bearbeitungsprozess herangezogen werden. Die so gewonnenen Daten können bei der Einrichtung der Betriebsparameter insbesondere auch dazu verwendet werden, die Bearbeitungszeit zu verkürzen, indem aus einer wirkenden Axialkraft und/oder einem anliegenden Drehmoment und/oder den erfassten Biegemomenten bzw. Biegemomentkomponenten zu jedem Zeitpunkt im Bearbeitungsprozess auf einen das Werkstück bearbeitenden Angriff des Werkzeuges an dem Werkstück geschlossen wird, z.B. bei einem Probelauf im Rahmen einer Einrichtungsprozedur zum Einrichten der Bearbeitungsmaschine. So kann z.B. im Falle eines Fräswerkzeuges erkannt werden, wann und optional auch in welchem Maße eine Frässchneide tatsächlich am Werkstück materialabtragend angreift, da zu diesem Zeitpunkt ein höheres Drehmoment zu beobachten sein wird bzw. bei einem Vortrieb zwischen Werkzeughalter und Werkstück in axialer Richtung des Werkzeughalters eine entsprechende axiale Reaktionskraft bzw. bei einem Vortrieb zwischen Werkzeughalter und Werkstück in einer Richtung quer zu dieser axialen Richtung entsprechende Anteile von Biegemomenten, die sich quer zu der Längsachse und auch der Rotationsachse des Werkzeuges bemerkbar machen. Eine entsprechende Optimierung kann hier also dahingehend erfolgen, dass der Bearbeitungsprozess derart parametriert wird, dass möglichst große Zeiten einer vorgegebenen entsprechenden Beanspruchung (Auftreten höherer Drehmomente, Auftreten einer Schwelle übersteigender Axialkräfte bzw. Auftreten einer Mindestgröße übersteigender Biegemomente) festgestellt werden. Hierbei können sämtliche der oben genannten Messgrößen und diesbezüglichen Werte aufgenommen und berücksichtigt werden, abhängig davon, welches konkrete Werkzeug bzw. welche Werkstückbearbeitungsmaschine hier mit Hilfe des erfindungsgemäßen Verfahrens eingerichtet werden soll, können aber auch nur eine oder zwei der genannten Messgrößen Berücksichtigung finden.

Zusätzlich oder alternativ kann bei der Einrichtung auch eine entsprechende möglichst werkzeugschonende Vorgehensweise Berücksichtigung finden. In entsprechenden Bearbeitungsprozessen sind die verwendeten Werkzeuge oft kostspielig, so dass die Werkzeugstandzeit ein nicht unerheblicher Kostenfaktor ist. Wird ein Werkzeug übermäßig hoch beansprucht, verringert sich dessen Standzeit, so dass es früher auszutauschen ist. Dies führt zum einen dazu, dass Werkzeuge früher unbrauchbar werden und durch ein neues Werkzeug zu ersetzen sind, mit den entsprechend hohen Beschaffungskosten. Zum anderen führt dies aber auch zu verkürzten durchgehenden Laufzeiten der Bearbeitungsmaschine, die in kürzeren Abständen für ein Umrüsten der Werkzeuge anzuhalten ist. Damit sind Produktionsausfälle verbunden, die ebenfalls einen wirtschaftlichen Verlust bedeuten. Auch die bei einer möglichen weiteren Verwertung des Werkzeuges vorzunehmenden Überholmaßnahmen, wie z.B. das Schärfen eines Fräswerkzeuges an den Frässchneiden oder das Schärfen der Schneidkanten eines Bohrers, sind aufwendig und mit Kosten verbunden, so dass auch hier eine längere Standzeit des Werkzeuges und längere Abschnitte zwischen solchen vorzunehmenden Überholmaßnahmen von wirtschaftlichem Vorteil sind. Mit dem erfindungsgemäßen Verfahren können hier entsprechende Maßnahmen vorgesehen werden, indem eine, zwei oder sämtliche der oben unter a. bis c. genannten Messgrößen hinsichtlich ihrer Werte bei einem Probedurchlauf des Bearbeitungsprozesses erfasst werden und die Werte für diese Messgrößen entsprechend ausgewertet werden, um z.B. für die Axialkraft eine maximale Kraft einzustellen, die auf eine verringerte Werkzeuglast, z.B. eines Bohrers, hindeutet, oder aber, z.B. im Falle eines Fräswerkzeuges die zulässigen Drehmomente und/oder Biegemomente auf einen Maximalwert festzulegen und den Prozess entsprechend so zu parametrieren, dass die Maximalwerte nicht überschritten werden. Gerade hierin liegt ein besonderer Vorteil des erfindungsgemäßen Verfahrens, da eine entsprechende Auflösung der Beobachtungen und aufgenommenen Messgrößen nicht möglich und entsprechend eine exakte Analyse der Beanspruchung des verwendeten Werkzeuges bisher nicht möglich war.

Im Zuge der Einrichtung des Bearbeitungsprozesses wird der Maschinenführer hier einen Kompromiss suchen zwischen einer verträglichen Werkzeugbelastung einerseits und einem wirtschaftlich gebotenen Durchsatz, d.h. einer hohen Bearbeitungsgeschwindigkeit, andererseits. Er kann eine entsprechende Verfahrenseinstellung und Prozessoptimierung hervorragend unter Rückgriff auf die gemäß dem erfindungsgemäßen Verfahren entweder einzeln, oder in Zweierkombinationen oder insgesamt zu messenden Messgrößen a. bis c. und die dafür aufgenommenen Werte ausführen. Bei einer Einrichtung des Bearbeitungsprozesses kann ein Maschinenführer dabei z.B. iterativ wie folgt vorgehen:
Zunächst kann er einen einmal voreingestellten und in einem Probelauf gefahrenen Bearbeitungsprozess hinsichtlich der aufgenommenen Messwerte im Hinblick auf für unzulässig erklärte Bearbeitungszustände auswerten, d.h. im Hinblick auf solche Bearbeitungszustände, zum Beispiel, in denen zumindest einmalig ein Wert für wenigstens eine der genannten Messgrößen einen vorgegebenen Maximalwert übersteigt, was z.B. auf eine übermäßig hohe Werkzeugbeanspruchung schließen lässt, aber auch als eine für das zu bearbeitende Werkstück und sein Material nicht hinnehmbar hohe Beanspruchung sprechen kann. Hier wird der Maschinenführer zunächst seine Bearbeitungsmaschine derart nachjustieren, dass in einem weiteren Probedurchlauf derartig als unzulässig definierte Bearbeitungszustände nicht mehr anzutreffen sind. In einer weiteren Stufe kann dann der Bearbeitungsprozess innerhalb des zulässigen Bereiches noch weiter optimiert werden, indem anhand der bestimmten Messwerte in weiteren Probedurchläufen eine Feinjustierung dahingehend erfolgt, als dass einerseits auf eine hohe Gesamtzeit des Werkzeugangriffes (also eine wie oben beschriebenen Optimierung im Hinblick auf bei einem Werkzeugangriff bzw. -eingriff auftretenden (Reaktions-)Kräften und Momenten) und damit eine schnelle Bearbeitungszeit geachtet wird, die für einen hohen Maschinendurchsatz sorgt, andererseits eine möglichst gleichmäßige und innerhalb vorgegebener Grenzen liegende Werkzeugbeanspruchung erzielt wird. In einem weiteren Schritt kann der Maschinenführer dann optional basierend auf den eingestellten Parametern eine Richtzeit für die Werkzeugstandzeit festlegen, nach der das Bearbeitungswerkzeug in der Bearbeitungsmaschine auszutauschen ist. Auch ist es in einer weiteren Ausbaustufe möglich ein Expertensystem zu integrieren, dass dem Maschinenbediener zumindest einen Teil der Interpretation der Messwerte abnimmt und ihm ggf. Vorschläge für Prozessverbesserungen unterbreitet.

Aber auch im Hinblick auf die Überwachung des Bearbeitungsverfahrens, welches mit der Werkstückbearbeitungsmaschine in der Parametrierung durchgeführt wird, kann das erfindungsgemäße Verfahren, welches die Aufnahme von Messwerten zu wenigstens einer der genannten Messgrößen vorsieht, mit Vorteil verwendet werden. So kann eine entsprechende Prozessüberwachung z.B. durch stichprobenartige Wiederholungsmessungen der bereits bei der Einrichtung der Werkstückbearbeitungsmaschine durchgeführten Messungen erfolgen, um durch Vergleich der Messwerte festzustellen, ob hier Betriebsparameter nachjustiert werden müssen, weil beispielsweise der Prozess "gewandert" ist, oder ob ein Werkzeug- oder Anlagenverschleiß der Bearbeitungsmaschine vorliegt. Dieser Vergleich kann auch gegenüber einem im Zuge der Einrichtung oder danach durchgeführten "Referenzprozess" erfolgen, in dem die Parametrierung der Maschine den ermittelten Vorgaben und das Ergebnis der Bearbeitung den Erwartungen und Anforderungen entsprach.

Bei dem erfindungsgemäßen Verfahren kann insbesondere durch die Feststellung der Biegemomente, aber auch aufgrund der anderen gemessenen Werte, erkannt werden, wenn maschinenseitig Veränderungen oder Probleme auftreten, wie beispielsweise ausgeschlagene Lager, auftretendes Spiel in Linearführungen oder dgl. So können sich bei optional rotatorisch antreibbaren Werkzeughaltern, wie sie bei Fräs-, Bohr-, Reibschweiß- oder Rührreibschweißmaschinen anzutreffen sind, derartige Phänomene beispielsweise durch eine Unwucht in der Werkzeugrotation bemerkbar machen, die wiederum -- dies bereits und insbesondere ohne Angriff an dem Werkstück - durch eine bei normalen Maschinenverhältnissen nicht zu beobachtende Asymmetrie der Biegemomentverteilung über die Rotation des Werkzeuges festzustellen ist. Insoweit kann für das erfindungsgemäße Verfahren auch eine Beobachtung der genannten Messgrößen, insbesondere des Drehmomentes um die Rotationsachse und/oder der Biegemomente (siehe b. und c. oben), bereits bei andrehendem bzw. frei rotierenden Werkzeug und ohne Angriff an dem Werkstück erfolgen. Über eine entsprechend festgestellte Unwucht in der Werkzeugrotation kann aber auch ein nicht ausreichend gewuchtetes, ein entlang des Umfanges beschädigtes (z.B. nach einem Schneidenbruch) oder ein nicht exakt ausgerichtete eingespanntes Werkzeug erkannt werden.

Um in einer für die Erfindung kennzeichnenden Darstellung in dem zu dem Werkzeug ortsfesten Koordinatensystem eine Entwicklung bzw. Dynamik der Messwerte über die Zeit nachverfolgen zu können, wird die Darstellung in dem Koordinatendiagramm mit Vorteil wie in Anspruch 5 angegeben ausgeführt.

der Bearbeitung zu legen, in der bewusst die Parametrierung des Prozesses dynamisch ist, in der also z.B. die Drehzahl eines rotierend angetriebenen Werkzeughalters verändert, z.B. erhöht, wird, in der die Vorschubgeschwindigkeit oder die Vorschubrichtung verändert wird. Dort entstehen dann Abbilder der Biegemomente, die diese Dynamik wiedergeben. Auch aus einer Auswertung derartiger Darstellungen kann, z.B. durch Vergleich mit einem Abbild, wie es für den gleichen Prozessschritt in einem auf der Bearbeitungsmaschine während der Bearbeitung eines gleichartigen Werkstückes mit dem gleichen Werkzeug zuvor durchgeführten und dokumentierten Referenzprozess aufgenommen worden ist, frühzeitig auf etwaige Fehler und Störungen, z.B. Werkzeugverschleiß oder einen Verschleiß oder Defekt in der Bearbeitungsmaschine, geschlossen werden.

Diese Art der Darstellung und Auswertung kann aber nicht nur für Werkzeuge in spanabtragenden Bearbeitungsverfahren zum Einsatz kommen, sondern gleichermaßen auch für die Anwendungen im Rührreibschweißen oder im reinen Reibschweißen, wo z.B. ein entsprechend mit im Querschnitt kreisförmiger Außenkontur versehenes Werkzeug ein entsprechend kreisförmiges Abbild in der wie oben beschrieben erhaltenen Darstellung ergibt und Abweichungen von der Kreisform auf eine unerwünschte Anomalie im Bearbeitungsprozess, zum Beispiel ein gegenüber der Rotationsachse schräges, also verkantetes Ansetzen des anzuschweißenden Elements, im Verständnis der Erfindung also des "Werkzeuges" schließen lassen.

Entsprechend kann, wie in Anspruch 6 angegeben, aus den Darstellungen in dem Koordinatendiagramm insbesondere auf Lasten auf einzelnen Umfangsabschnitten eines in dem Werkzeughalter angeordneten, z.B. um die Rotationsachse angetrieben rotierenden, Werkzeuges geschlossen bzw. können aus diesen Darstellungen entsprechende Lasten ausgelesen werden.

Wie bereits eingangs erwähnt, kann hier bei der Einrichtung so vorgegangen werden, dass diese abgelesenen Lasten verringert werden, um z.B. eine Werkzeugbeanspruchung möglichst gering zu halten. Gleichermaßen kann, wie ebenfalls bereits erwähnt, aus diesen Lasten und einer beobachteten Zunahme derselben auf einen Werkzeugverschleiß geschlossen werden, wobei hier Maximallasten definiert werden können, die in dem vorgegebenen Bearbeitungsprozess erreicht werden, und bei deren Überschreitung bzw. bei deren Erreichen ein Werkzeugverschleiß als maximal tolerabel aufgefasst und ein Werkzeugwechsel angeordnet werden kann.

Wird, wie oben bereits erörtert, in der Darstellung der Messpunkte in dem Koordinatendiagramm eine von dem erwarteten Bild abweichende Darstellung erkannt, ist diese insbesondere unsymmetrisch abweichend, kann mit Vorteil auf eine Anomalie im Bearbeitungsprozess geschlossen, die visuell dem Anlagenbediener dargestellt werden kann, automatisch eine entsprechende Warnung auslöst oder auch nur zu Dokumentationszwecken archiviert werden kann.

Eine Auswertung der ermittelten Daten für die Biegemomente kann aber nicht nur durch einen richtungsaufgelösten Auftrag wie oben beschrieben erfolgen, sondern auch durch einen von der vorliegenden Erfindung nicht erfassten Auftrag des Betrages der sich aus allen Biegemomenten ergebenden Vektorsumme über die Zeit. Dabei kann der resultierende Vektor vor einer Betragsbildung oder können die einzelnen Beiträge vor deren vektorieller Addition noch auf eine senkrecht zur ersten Achse stehende Ebene projiziert werden, um so nur den resultierenden Betrag des Biegemoments zu berücksichtigen, der in senkrechte Richtung zu der ersten Achse wirksam ist. Bei einer solchen Betrachtung können unzulässig hohe Biegemomente erkannt werden, die z.B. oberhalb eines zuvor bestimmten Grenzwertes liegen und als Anzeichen für eine zu hohe Werkzeugbelastung bei einer Einrichtung der Bearbeitungsmaschine nach den Betriebsparametern dienen oder auch als Indikator für einen ein zulässiges Maß übersteigenden Werkzeugverschleiß im Falle der prozessbegleitenden Überwachung. Eine solche Auswertung kann aber auch Anomalien erkennen lassen, die z.B. auf nicht ordnungsgemäße Fertigungsabläufe hindeuten und damit ein Abweichen des Bearbeitungsergebnisses am Werkstück von der Vorgabe.

Bei der Einrichtung kann aber auch ein minimaler Wert für den Betrag der Vektorsumme der Biegemomente bestimmt werden, der eine Werkzeugangriff am Werkstück und damit eine tatsächliche spanabtragende Bearbeitung anzeigt und der nach Möglichkeit für einen weiten Zeitanteil des Bearbeitungsprozesses überschritten werden soll. Werden hierbei zudem die Richtungskomponenten des Biegemoments in einer wie weiter oben beschriebenen Darstellung betrachtet, so kann dies z.B. bei einem Fräswerkzeug, auch auf einzelne Werkzeugschneiden oder andere bearbeitende Umfangsabschnitte des Werkzeuges aufgelöst betrachtet und kann eine entsprechende Anpassung der Einstellungen und Parameter vorgenommen werden.

Im Rahmen des erfindungsgemäßen Verfahrens ist es insbesondere auch möglich und bildet den Inhalt einer vorteilhaften Weiterbildung, wenn aus den erfassten Werten der Messgröße(n) und einer an sich bekannten Geometrie des verwendeten Werkzeuges sowie den an sich bekannten Materialeigenschaften desselben sowie ferner aus einer an sich, z.B. im Rahmen der Betriebs- und Steuersoftwaren der Bearbeitungsmaschine, bekannten Positionierung des Werkzeuges in der Werkzeugaufnahme rechnerisch auf Ausweichbewegungen und/oder Verformungen des Werkzeuges an einer Position von Bearbeitungsabschnitten desselben zu schließen. Dazu können z.B. rechnerische Simulationen dienen, die unter Berücksichtigung von Daten zu der Werkzeuggeometrie, den Eigenschaften des Materials, aus dem das Werkzeug besteht, sowie der exakten Einspannung und Positionierung des Werkzeuges im Werkzeughalter aus mit den Messsensoren gemessenen Werten für auf das Werkzeug einwirkende Kräfte und/oder Momente (Dreh- und/oder Biegemomente) auf Verformungen bzw. Ausweichbewegungen des Werkzeuges schließen lassen.

Auf diese Weise kann z.B. bei der Einrichtung eines Bearbeitungsprozesses eine entsprechende Bewegung und Lageveränderung der Bearbeitungsabschnitte des Werkzeuges berücksichtigt werden, es können für die Einhaltung der Genauigkeit entsprechende Nachstellbewegungen durch die Bearbeitungsmaschine vorgegeben werden. Auch ist es möglich, die Einhaltung einer Toleranzgrenze bei der Bearbeitung in einer Überwachung der Parameter nachzuhalten. Verändern sich hier die ermittelten Werte, so kann eine Warnung ausgegeben werden. Es können aber auch die so ermittelten Daten einer Positionsveränderung der Bearbeitungsabschnitte des Werkzeuges als Steuerdaten verwendet werden, um während einer laufenden Bearbeitung entsprechende Nachstellbewegungen in-situ zu generieren. Dies ist insbesondere bei besonders engen Toleranzen, wie sie z.B. im Werkzeugbau gefordert sind, von Vorteil. Auch ist diese Vorgehensweise bedeutsam, wenn, z.B. für das Bearbeiten von tiefen Hohlräumen oder Kehlen, mit langem Schaft versehene und dennoch filigrane Werkzeuge verwendet werden, die entsprechend empfindlicher auf einwirkende Querkräfte reagieren und zu Ausweichbewegungen neigen, dies umso mehr, wenn z.B. Schneiden von zerspanenden Werkzeugen stumpf werden und die Bearbeitung in diesem Zuge höhere Kräfte bedingt.

Werden die Werte für die Axialkraft bestimmt, so können diese mit Vorteil im Hinblick auf eine als maximal zulässig definierte Grenzaxialkraft in Vergleich gestellt werden. Hierbei kann z.B. die Grenzkraft im Falle einer Überwachung des Bearbeitungsprozesses im laufenden Betrieb (sei dies dauerhaft oder stichprobenmäßig) als eine solche festgelegt werden, die bei einem maximal zulässig verschlissenen Werkzeug auftritt. Wird diese Grenzkraft dann erreicht oder gar überschritten, so kann dies im erfindungsgemäßen Verfahrensablauf als Auslöser für einen Werkzeugwechsel hergenommen werden. Im Falle einer Einrichtung des Bearbeitungsprozesses kann die Grenzkraft so festgelegt werden, dass diese eine maximal zulässige Werkzeugbeanspruchung anzeigt, so dass für den Einrichtungsvorgang diese Grenzkraft nicht überschritten werden soll. Zugleich kann aber auch eine untere Grenze für die Axialkraft bestimmt werden, oberhalb derer bei einer Einrichtung des Bearbeitungsprozesses sich die auftretende Axialkraft vorzugsweise bewegen sollte, um z.B. sicherzustellen, dass das Bearbeitungsverfahren mit einer wirtschaftlich sinnvollen Bearbeitungsgeschwindigkeit und mithin einem entsprechenden Durchsatz durchgeführt wird.

Gleichermaßen ist es bei der Durchführung des erfindungsgemäßen Verfahrens möglich und kann abhängig von der Art der Bearbeitungsmaschine und der mit ihr durchgeführten Bearbeitungsvorgänge im Rahmen der Erfindung sinnvoll sein, zumindest die Werte für das Drehmoment zu bestimmen und im Hinblick auf ein als maximal zulässig definiertes Grenzdrehmoment in Vergleich zu stellen. Auch hier kann im Zuge einer Überwachung des Bearbeitungsprozesses (sei dies wiederum kontinuierlich oder sei dies stichprobenartig) das Grenzdrehmoment als ein solches bestimmt werden, das bei einem maximal zulässig verschlissenen Werkzeug auftritt. Wiederum ist es möglich, entsprechend für die Einrichtung des Bearbeitungsprozesses das Grenzdrehmoment als ein solches festzulegen, das bei einer maximal zulässigen Werkzeugbeanspruchung auftritt. Auch hier ist es wiederum möglich, bei insbesondere der Einrichtung des Bearbeitungsprozesses ein Minimaldrehmoment zu bestimmen, welches vorzugsweise dauerhaft, zumindest aber in weiten zeitlichen Anteilen des Verfahrens überschritten werden soll, um die Bearbeitungszeit zu verkürzen und den Durchsatz der Bearbeitungsmaschine zu erhöhen.

Neben einer Axialbewegung des Werkzeughalters relativ zu dem Werkstück durch entsprechende Verfahrmöglichkeiten in Richtung der ersten Achse kann es vorgesehen sein, dass die Bearbeitungsmaschine weiterhin Mittel aufweist, um Werkstück und Werkzeughalter in wenigstens einer senkrecht zu der ersten Achse liegenden Richtung relativ zueinander linear verfahren zu können. Gerade in einem solchen Falle ist die Beobachtung der Biegemomente von besonderem Interesse, da bei einem entsprechenden Verfahren von Werkzeughalter relativ zu Werkstück quer zur Rotationsachse entsprechende Biegebeanspruchungen auftreten. Dies ist z.B. bei Fräsbearbeitungen, z.T. bei Drehbearbeitungen, aber auch beim Rührreibschweißen der Fall. Auch hier wiederum sei anzumerken, dass die genannten Mittel entweder eine aktive Bewegung des Werkzeughalter gegenüber dem still stehenden Werkstück, eine aktive Bewegung des Werkstückes relativ zu dem Werkzeughalter oder eine Kombination dieser Bewegungen vorsehen kann.

Bei dem erfindungsgemäßen Verfahren umfasst die Erfassung der Werte für die wenigstens eine Messgröße mit Vorteil eine Übermittlung der Werte von einem Messaufnehmer zu einer Auswerteeinrichtung, wobei dann diese Übermittlung wenigstens in einem Abschnitt drahtlos erfolgt. Dies ist insbesondere dann von Relevanz und besonderem Vorteil, wenn der Werkzeughalter rotatorisch antreibbar ist. Denn eine drahtgebundene Übermittlung von Messwerten, die an einem rotatorisch bewegten Werkzeughalter aufgenommen werden, zu einer stationären Einrichtung, an der die Auswertung erfolgt, kann dort nicht oder nur mit großem Aufwand realisiert werden. Für eine entsprechende Aufnahme der Messwerte kann insbesondere ein Messsystem verwendet werden, wie dies in der US 8,113,066 B2 beschrieben ist. Das dort gezeigte Messsystem, welches als Einspannadapter für eine Werkzeugaufnahme einer Bearbeitungsmaschine ausgebildet ist mit einem Ansatz zum Einspannen in der Werkzeugaufnahme der Bearbeitungsmaschine und einem Werkzeughalter und einer dazwischen angeordneten Anordnung von Messaufnehmern, eignet sich hervorragend für die Durchführung des erfindungsgemäßen Verfahrens, da es die hier zugrunde zu legenden Messgrößen feststellen und entsprechende Werte für diese aufnehmen kann.

Es ist hier noch einmal deutlich festzuhalten, dass zwar einzelne der vorstehend mit den Aufzählungszeichen a. bis c. bezeichneten Messgrößen bzw. deren Messwerte als Grundlage für die Beurteilung des Bearbeitungsprozesses hergenommen werden können, dass aber insbesondere auch eine Kombination aus Messwerten zu zwei oder sogar allen drei der Messgrößen zu besonders validen Ergebnissen führt, wobei auch anhand einer Verifikation eines über eine der Messgrößen bzw. die zugehörigen Messwerte festgestellten Zustandes über die Messwerte zu einer zweiten der Messgrößen eine höhere Sicherheit und Genauigkeit der Aussagen erreicht werden kann.

Auch ist es möglich, weitere Parameter in die Zustandsanalyse und als Grundlage für die Einrichtung und/oder Überwachung der Werkstückbearbeitungsmaschine mit einzubeziehen, z.B. eine gemessene Werkzeug- oder Werkstücktemperatur. So können z.B. über eine Temperaturanstieg am Werkzeug ebenfalls Rückschlüsse gezogen werden auf eine unzulässige hohe Beanspruchung eines Werkzeuges (z.B. bei der Einrichtung des Prozesses) oder auf eine fortgeschrittenen Verschleiß des Werkzeuges. Dabei ist es z.B. möglich und ist Grundlage einer vorteilhaften Weiterbildung der Erfindung, wenn mittels wenigstens eines Temperatursensors am Werkzeughalter und/oder eines in diesem gehaltenen Werkzeuges die Werkzeugtemperatur erfasst und mit den aufgenommenen Werten für die Messgröße(n) korreliert wird. Denn die zulässige Belastung eines Werkzeuges ist unter anderem auch abhängig von seiner Temperatur. Bei eine kritische Schwelle übersteigenden Temperaturen nimmt die Belastbarkeit in der Regel ab. Auf diese Weise können die Temperaturwerte bereits bei der Einrichtung der Bearbeitungsmaschine berücksichtigt werden. Sie können aber auch im Rahmen einer weiteren Prozessüberwachung mit in die Beurteilung einfließen, erlauben so eine Anpassung der Betriebsparameter auch unter Berücksichtigung dieses Aspektes.

Weiterhin liegt es im Rahmen der Erfindung, wenn für eine Überwachung der Betriebsparameter die ermittelten Werte für die wenigstens eine Messgröße und/oder daraus abgeleitete Auswertungen über die Einhaltung zuvor festgelegter Grenzwerte für jeden Bearbeitungsdurchlauf archiviert und in einem Bearbeitungsprotokoll gespeichert werden. Dabei kann eine Zuordnung zu im Zuge der so protokollierten Bearbeitungsabläufe bearbeiteten Werkstücke vorgenommen werden, um so die ordnungsgemäße und den Vorgaben entsprechende Bearbeitung belegen zu können. Dies kann über eine 1:1 Zuordnung eines gesondert identifizierten und (z.B. über eine Seriennummer) individualisierten Werkstückes zu dem Bearbeitungsdurchlauf geschehen oder auch über eine Batch weise Zuordnung von Bearbeitungsprotokollen zu einem Werkstückbatch. Derartige Nachweise sind in der heutigen Herstellungspraxis häufig verlangt, z.B. im Bereich der Automobilzulieferer. Bisher konnten dazu lediglich mittelbare Daten geliefert werden, die einen ordnungsgemäßen Programmablauf auf der Bearbeitungsmaschine aufzeigten. Mit der Zuordnung realer Messwertprotokolle zu mindestens einer der Messgrößen, vorteilhaft aber insbesondere der Biegemomente, die hier möglich werden, ist eine erhebliche Verbesserung erzielt.

Wenn, wie es eine weitere vorteilhafte Ausgestaltung der Erfindung vorsieht, anhand von aus Datenblättern der Hersteller bzw. Lieferanten typischerweise erhältlichen, in Teilen sogar oftmals digital mitgelieferten Daten zur Geometrie des Werkzeuges, zu den Materialeigenschaften des Werkzeuges, zu der Geometrie und den Materialeigenschafgen des Werkstücks sowie zu der - aus der Einrichtung einer digital gesteuerten Bearbeitungsmaschine ablesbaren - Einspannung und Positionierung des Werkzeuges in dem Werkzeughalter und aus den ermittelten Werten für die wenigstens eine Messgröße auf beim Bearbeitungsprozess tatsächlich auftretende normierte Spankräfte geschlossen wird, so kann hier ein Abgleich mit den diesbezüglichen Angaben einer zulässigen Belastung des Werkzeuges, die der Hersteller trifft und typischerweise auf den Datenblättern zu seinem Werkzeug mit aushändigt, vorgenommen werden, um so eine besonders genaue Abschätzung der zulässigen, aber auch der für ein verschleißarmes und mit hohem Durchsatz, im Falle eines zerspanenden Prozesses also hohem Zerspanvolumen, günstigen Betriebsparameter der Bearbeitungsmaschine vornehmen zu können und ggf. die Parameter im Rahmen einer Einrichtung des Bearbeitungsablaufes oder aber auch im Zuge einer Überwachung in der laufenden Fertigung nachzujustieren.

Um bestimmte periodisch auftretende Phänomene, wie Schwingungen im System, zu erkennen, können die ermittelten Messwerte in einer nachfolgenden Analyse auch entsprechenden Transformationsanalysen unterzogen werden, wie einer La-Place-Transformation, einer Fourier-Transformation oder eine Fast-Fourier-Transformation (FFT). Aus erkannten Schwingverhalten lassen sich dabei insbesondere auch auf Maschinenfehler schließen, da ein nicht zulässiges "Ausweichen" der Maschine gegenüber den auftretenden und von der Mechanik der Maschine abzufangenden Reaktionskräften, das z.B. auf Lagerschäden, wie z. B. einem Lagerspiel in dem rotatorisch antreibbaren Werkzeughalter (bspw. einer Werkzeugspindel), einem zu hohen seitlichen Spiel in Linearführungen aber auch einer zu schwachen Auslegung der Maschine zurückzuführen sein kann, sich häufig in einem schwingenden Verhalten zeigt. Schwingende Zustände sind auch aus Sicht des schonenden Umgangs mit dem Werkzeug zu vermeiden, da dieses im Falle solcher Schwingungen hohen Kraft- und Lastspitzen ausgesetzt ist.

Aus der erfindungsgemäßen Vorgehensweise können im Falle einer Überwachung aus den beobachteten Werten für die Messgrößen auch auf Besonderheiten am Werkstück Rückschlüsse gezogen werden. So könnten sprunghafte Veränderungen der beobachteten Biegemomente oder Drehmomente beim Fräsen auf Materialinhomogenitäten im Werkstück schließen lassen. So kann sich mit dem erfindungsgemäßen Verfahren sogar Produktionsausschuss erkennen lassen, der ohne aufwendige Materialprüfung (z.B. Röntgenanalyse) der Werkstücke nicht erkennbar wäre. Auf ähnliche Weise lässt eine sprunghafte Veränderung der Axialkraft, aber auch eine entsprechende Veränderung der Biegemomente und auch des Drehmoments beim Bohren auf Inhomogenitäten des Werkstückmaterials schließen.

Die besondere Eignung der Betrachtung der Biegemomente als Basis für die Beurteilung des Bearbeitungsprozesses an sich, des Werkzeugzustandes, aber auch der Maschineneigenschaften ist vor allem auch dadurch zu begründen, dass mit den im Besonderen vorgeschlagenen, an dem Werkzeughalter angeordneten Messaufnehmern DMS, SAW-Sensoren oder dergleichen zunächst Verformungen detektiert und aus diesen auf wirkende Kräfte und Momente rückgeschlossen wird. Diese Verformungen hängen im Fall von wirkenden Momenten im Besonderen von dem einbezogenen Hebel, also dem Abstand von einem Drehpunkt und dem Angriffspunkt der beteiligten Kraft ab. Während für eine Drehmomentmessung der Hebel (letztlich bedingt durch den vergleichsweise geringen Radius der verwendeten Werkzeuge) recht gering ist, wird durch die deutlich längere Schaftlänge des Werkzeuges kombiniert mit der zusätzlichen Länge des Werkzeughalters, dort ein deutlich größerer Hebel erzielt, der für gewöhnlich um eine Faktor von etwa 10 größer sein wird. Somit sind dann aber auch Änderungen der mit den Messaufnehmern festgestellten Verformungen in entsprechender Skalierung größer, was zu höheren Messgenauigkeiten und -auflösungen führt, somit sicherere Aussagen und Rückschlüsse auch bei geringen Veränderungen ergibt.

Beispiele für die erfindungsgemäße Auswertung von für die Messgrößen "Biegemoment" aufgenommenen Werten finden sich in den beigefügten Figuren, anhand denen beispielhafte im Rahmen der Erfindung liegende Vorgehensweisen bei der Einrichtung und/oder Überwachung der Betriebsparameter einer Bearbeitungsmaschine erläutert werden.

Es zeigen dabei:
- Fig. 1: eine Darstellung von Biegemomentmesswerten in einem zweidimensionalen Koordinatendiagramm aufgelöst nach Richtung und Betrag der Biegemomente;
- Fig. 2: eine andere Art der Darstellung von Biegemomentmesswerten nach dem Betrag einer vektoriell gebildeten Summe der anliegenden Biegemomente aufgetragen über die Zeit;
- Fig. 3: einen Detailausschnitt einer Darstellung gemäß Fig. 2;
- Fig. 4: eine Darstellung der Biegemomentmesswerte nach dem Betrag einer vektoriell gebildeten Summe der anliegenden Biegemomente aufgetragen über die Zeit für eine Innenfräsung eines runden Ausschnittes in fünf in der Tiefe aufeinanderfolgenden, hier in der Darstellung übereinander aufgetragenen Bearbeitungsschritten.

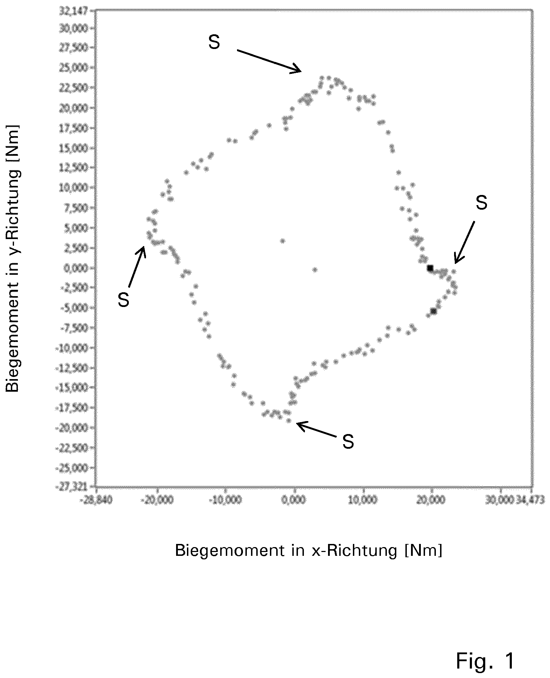

In der beigeschlossenen Fig. 1 ist eine Darstellung von Biegemomentmesswerten aufgezeigt, die nach senkrecht zueinander stehenden und in einer senkrecht zur Rotationsachse gelegenen Ebene, bezogen auf den rotierbaren Werkzeughalter ortsfesten Koordinaten aufgenommene Wertepaare der x- und y-Richtung zeigen. Das dort gezeigte Beispiel bildet Biegemomente ab, wie sie auf einem vierschneidigen Fräswerkzeug während eines Bearbeitungsvorganges und während einer hinsichtlich der Parametrierung (Werkzeugdrehzahl, Vorschubgeschwindigkeit, Vorschubrichtung) gleichbleibenden Bearbeitungsphase gemessen wurden. Gut zu erkennen sind die mit dem Bezugszeichen S kenntlich gemachten Datenpunkte, die die Schneiden des Fräswerkzeuges abbilden. In dieser Darstellung steht jeder Punkt der Datenwolke für ein zu einem Zeitpunkt t aufgenommenes Wertepaar, insgesamt wurden während eines Zeitintervalls Δt₁ eine Vielzahl von Wertepaaren aufgenommen, um die Darstellung zu erhalten.

In dieser Figur (Fig. 1) sind erkennbar die aufgenommenen und dargestellten Werte auf eine über den Zeitraum Δt₁ gleichbleibenden Konturlinie verteilt. Dies ist gerade die Folge davon, dass innerhalb des Intervalls Δt₁ die Bearbeitungsparameter nicht verändert wurden, d.h. zum Beispiel keine Veränderung der Drehzahl des rotierenden Werkzeuges erfolgte und auch keine Änderungen in der Vorschubgeschwindigkeit und/oder -richtung der Relativbewegung zwischen Werkzeug und Werkstück. Sofern während des Zeitraums Δt₁ derartige Änderungen erfolgen, so ergeben sich andere Abbilder, aus denen andere Schlussfolgerungen auf die dynamische Entwicklung des Bearbeitungsprozesses gezogen werden können. Auch solche Abbilder der dynamischen Entwicklungsvorgänge können aber für die Auswertung von Interesse und wertvoll sein, z.B. im Vergleich zu während eines Referenzprozesses für eine gleichartige Bearbeitung auf der Bearbeitungsmaschine aufgenommenen Bildern, um so Abweichungen im Prozess und/oder im Maschinenverhalten frühzeitig aufdecken zu können.

Aus dieser Darstellung können nun Informationen abgeleitet werden über den Zustand und die Belastung des Werkzeuges wie auch über den Ablauf des Bearbeitungsverfahrens. In der gezeigten Darstellung ist die erhaltene Figur symmetrisch. Würden hier nun asymmetrische Abweichungen erkennbar, so ließe dies auf einen Fehler im Bearbeitungsprozess schließen, z.B. einen Schneidenbruch des Fräswerkzeuges, wenn sich eine der Frässchneiden nicht mehr abbilden würde.

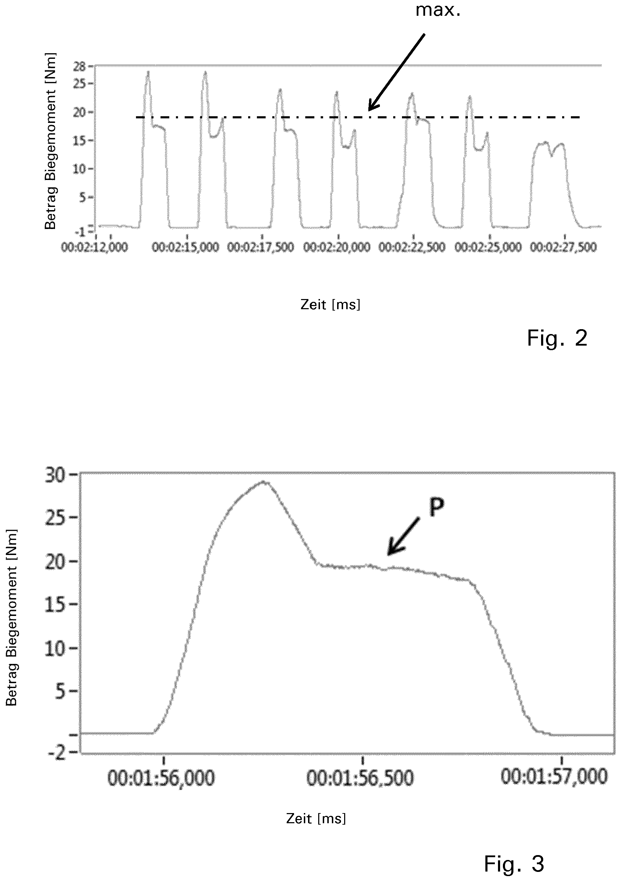

Fig. 2 zeigt eine andere Art der Darstellung und Auswertung der Messwerte für die anliegenden Biegemomente. Dort sind ist der Betrag der Vektorsumme aller zu einem bestimmten Zeitpunkt anliegenden Biegemomente (also der Betrag eines resultierenden Biegemomentes) in Abhängigkeit des Zeitlaufes aufgetragen. Aus dieser Darstellung lassen sich mithin die in Summe zu einem bestimmten Zeitpunkt anliegenden Lasten, die hier senkrecht zur Rotationsachse wirken, ablesen. Wie in der Figur angedeutet, kann dabei ein hier durch die mit "max." bezeichnete gestrichelte Linie veranschaulichtes maximaler Betragswert für die vektoriell aufsummierten Biegemomente festgelegt werden, um z.B. bei der Einrichtung des Prozesses auf der Bearbeitungsmaschine die Parametrierung so vorzunehmen, dass dieser Wert - auch in den hier dargestellten Spitzen - nicht überschritten wird. Dazu können z.B. Zustell- oder Verlagerungsbewegungen zwischen Werkstück und Werkzeug so verändert werden, dass diese Spitzen abgemildert und auch in diesen Bereichen die Beträge der Summen der Biegemomente unterhalb der vorgegebenen Linie der Grenzbeträge bleiben.

In Fig. 3 ist in herausgehobener Darstellung ein Verlauf des Betrages der Vektorsumme der am Werkzeugträger anliegenden Biegemomente gezeigt, wie er auch in Fig. 2 wiedergegeben ist. Dabei ist ein mit P bezeichnetes Plateau zu erkennen, in dem der Betrag der vektoriellen Summe der an dem Werkzeughalter angreifenden Biegemomente im Wesentlichen gleichbleibend ist. In einem solchen Zeitfenster kann mit Vorteil eine Auswertung und Aufzeichnung des Biegemomentes auch nach der Richtung, wie in Fig. 1 dargestellt, erfolgen. Denn dort ändert sich nicht etwa die Verhältnisse aufgrund in den Flanken der Kurve in Fig. 3 erkennbarer wechselnder Parametervorgaben der Bearbeitungsmaschine, so dass ein Bild wie in Fig. 1 gezeigt erhalten werden kann.

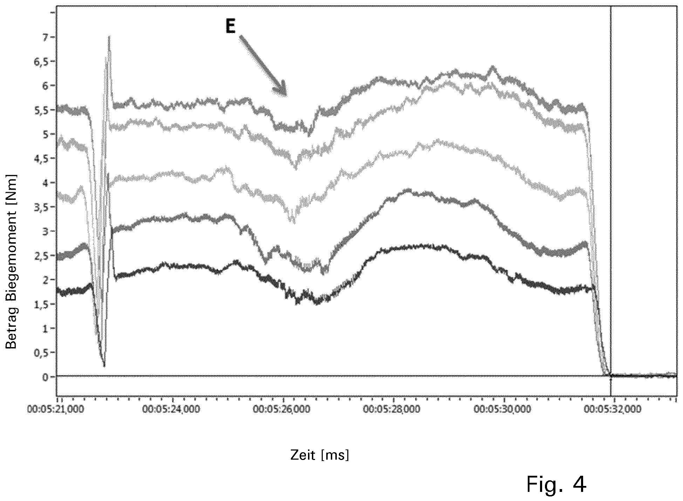

Fig. 4 zeigt den Verlauf des Betragswertes der Vektorsumme der Biegemomente über die Zeit, wie er während einer versuchsweise durchgeführten Fräsbearbeitung für das Einbringen einer in der Innenkontur kreisförmigen Vertiefung in einem Werkstück aufgenommen worden war. In der Figur sind - der besseren Übersichtlichkeit halber in y-Richtung (der Richtung des Auftrags des Betrages der Biegemomente) gestaffelt - die Verläufe von insgesamt fünf Fräsvorgängen in fünf sukzessive angefahrenen Bearbeitungstiefen (z-Richtung) gezeigt. In der Figur links sind steile Verläufe mit nach unten und oben ausbrechenden Spitzen gezeigt, die den Anstellvorgang kennzeichnen. Im weiteren Verlauf sind die Betragswerte des Biegemoments während eines Fräsumlaufes zu erkennen. Gut zu erkennen sind - in allen Bearbeitungstiefen - Einbrüche in dem Betrag der vektoriellen Summe der Biegemomente, die mit dem mit "E" bezeichneten Pfeil bedeutet sind. Diese Einbrüche lassen auf einen Fehler in der Bearbeitung schließen, da bei einer exakten runden Bearbeitung ein gleichmäßiger Verlauf des Biegemomentbetrages zu erwarten wäre. In diesem Beispiel ergab sich eine nicht exakt rund ausgeführte Fräsung aufgrund einer fehlerhaften Maschineneinstellung. Die dargestellte Auswertung konnte helfen, diesen Umstand frühzeitig aufzudecken (hier bereits bei der Einrichtung der Bearbeitungsmaschine für einen Serienprozess).

## Patentansprüche

1. Verfahren zur Einrichtung und/oder Überwachung von Betriebsparametern einer Werkstückbearbeitungsmaschine, die einen Werkzeughalter und Mittel zum relativen Bewegen eines Werkstückes und des Werkzeughalters zueinander jedenfalls entlang einer ersten Achse aufweist, wobei im Bearbeitungsbetrieb des mit einem Werkzeug bestückten Werkzeughalters und im Angriff des Werkzeuges an ein Werkstück Werte für wenigstens eine der folgenden bei Interaktion zwischen dem Werkzeug und dem Werkstück am Werkzeug auftretenden und auf den Werkzeughalter übertragenen Messgrößen am Werkzeughalter erfasst und für den Ablauf der Bearbeitung aufgezeichnet werden:
a. Biegemomente oder Biegemomentkomponenten nach Richtung und Betrag,
wobei die ermittelten Werte für die wenigstens eine Messgröße verwendet werden, um eine im Hinblick auf eine verlängerte Standzeit des verwendeten Werkzeuges bei gleichzeitig eine Maximalbearbeitungszeit unterschreitende Bearbeitungszeit abgestimmte Einrichtung der Betriebsparameter vorzunehmen und/oder um den Bearbeitungsprozess im Hinblick auf eine Reproduzierbarkeit desselben und/oder einen Werkzeugverschleiß und/oder einen Maschinenfehler der Werkstückbearbeitungsmaschine zu überwachen, **dadurch gekennzeichnet, dass** die Betragswerte und Richtungen für die Messgrößen der Biegemomente und/oder Biegemomentkomponenten in einer zu der ersten Achse senkrechten, zu dem Werkzeughalter ortsfesten, bei rotierendem Werkzeughalter mit diesem mitdrehenden, Ebene liegenden, relativ zu dem Werkzeughalter ortsfesten Koordinatensystem erfasst werden und dass für die Auswertung ein Auftrag einer Vielzahl von jeweils aus zu einem vorgegebenen Messzeitpunkt t erfassten Werten der Biegemomente bzw. Biegemomentkomponenten in einem zweidimensionalen Koordinatendiagramm erfolgt.

2. Verfahren nach einem der Ansprüche 1, **dadurch gekennzeichnet, dass** zusätzlich zu den Biegemomenten oder Biegemomentkomponenten nach Richtung und Betrag als weitere Messgröße(n)
b. ein in Bezug auf die erste Achse oder eine parallel dazu liegende Achse anliegendes Drehmoment und/oder
c. eine in Richtung parallel zu der ersten Achse wirkende Axialkraft aufgezeichnet wird / werden.

3. Verfahren nach Anspruch 2, **dadurch gekennzeichnet, dass** das der Werkzeughalter rotatorisch um die erste Achse oder eine zu der ersten Achse parallele Rotationsachse antreibbar ist, wobei, sofern Werte für die Messgröße b. erfasst werden, das in Bezug auf die Rotationsachse anliegende Drehmoment erfasst wird.

4. Verfahren nach einem der vorhergehenden Ansprüche, **dadurch gekennzeichnet, dass** die Betragswerte und Richtungen für die Messgrößen der Biegemomente und/oder Biegemomentkomponenten in zwei zueinander senkrecht stehenden, in einer zu der ersten Achse senkrechten, zu dem Werkzeughalter ortsfesten, bei dem rotierendem Werkzeughalter mit diesem mitdrehenden, Ebene liegenden, relativ zu dem Werkzeughalter ortsfest bestimmten Richtungen, einer x-Richtung und einer y-Richtung, erfasst werden und dass für die Auswertung ein Auftrag einer Vielzahl von jeweils aus zu einem vorgegebenen Messzeitpunkt t erfassten Werten der Biegemomente bzw. Biegemomentkomponenten in x-Richtung und in y-Richtung gebildeten Wertepaaren in einem zweidimensionalen, rechtwinkeligen Koordinatendiagramm mit den Werten in x-Richtung entlang einer ersten Koordinatenachse und den Werten in y-Richtung entlang einer zweiten Koordinatenachse als Darstellungspunkte erfolgt.

5. Verfahren nach einem der vorhergehenden Ansprüche, **dadurch gekennzeichnet, dass** die Darstellung in dem Koordinatendiagramm für innerhalb eines Zeitintervalls Δt₁ liegende, mit einer Abtastrate, die insoweit deutlich kleiner ist als das Zeitintervall Δt₁, als dass innerhalb des _Zeitintervalls Δt₁ eine für eine aussagekräftige Darstellung ausreichende Datenmenge aufgenommen wird, aufgenommene Wertepaare erfolgt, dass nach Ende des Zeitintervalls Δt₁ eine weitere Darstellung von innerhalb eines weiteren Zeitintervalls Δt₂ liegende, mit einer Abtastrate, die insoweit deutlich kleiner ist als das Zeitintervall Δt₂, , als dass innerhalb des _Zeitintervalls Δt₂ eine für eine aussagekräftige Darstellung ausreichende Datenmenge aufgenommen wird, aufgenommenen Wertepaaren in einem neuen Koordinatendiagramm erfolgt und Odass für die Feststellung einer dynamischen Entwicklung von Betriebsbedingungen, insbesondere des Werkzeugzustandes, die aufeinanderfolgenden Darstellungen in Vergleich genommen werden.

6. Verfahren nach einem der vorhergehenden Ansprüche, **dadurch gekennzeichnet, dass** bei einem rotierenden Werkzeughalter aus den Darstellungen in dem Koordinatendiagramm Lasten auf einzelnen Umfangsabschnitten eines in dem Werkzeughalter angeordneten, um die Rotationsachse angetrieben rotierenden Werkzeuges ausgelesen werden.

7. Verfahren nach Anspruch 6, **dadurch gekennzeichnet, dass** bei einer Einrichtung des Bearbeitungsprozesses anhand der Darstellung in dem Koordinatendiagramm eine Einstellung des Verfahrens vorgenommen wird, bei der die aus der Darstellung in dem Koordinatendiagramm ablesbaren Lasten auf den einzelnen Umfangsabschnitten des rotierenden Werkzeuges durch Änderung der Betriebsparameter verringert werden.

8. Verfahren nach Anspruch 6, **dadurch gekennzeichnet, dass** bei einer Überwachung des Bearbeitungsprozesses Veränderungen der auf die einzelnen Umfangsabschnitte einwirkenden Lasten beobachtet und daraus ein Verschleiß des Werkzeuges abgeleitet wird, wobei bei Erreichen eines vorgegebenen kritischen Verschleißes eine Meldung zum Werkzeugwechsel ausgegeben wird.

9. Verfahren nach einem der Ansprüche 1 bis 6, **dadurch gekennzeichnet, dass** aus von dem erwarteten Bild der Darstellung der Messpunkte in dem Koordinatendiagramm abweichenden, insbesondere unsymmetrisch abweichenden, Darstellungen auf eine Anomalie im Bearbeitungsprozess geschlossen wird und eine entsprechende Warnung erfolgt.

10. Verfahren nach einem der vorhergehenden Ansprüche, **dadurch gekennzeichnet, dass** für eine Überwachung der Betriebsparameter der Bearbeitungsmaschine anhand der Darstellungen von während des Bearbeitungsprozesses aufgenommenen Werten in dem Koordinatendiagramm und/oder in dem Auftrag der Vektorsumme in Abhängigkeit von der Zeit ein Abgleich mit für entsprechende Referenzprozesse aufgenommenen und in einem Koordinatendiagramm bzw. als Darstellung der Vektorsumme in Abhängigkeit von der Zeit aufgenommenen Werten erfolgt, um so eine Veränderung in dem Prozess frühzeitig zu erkennen.

11. Verfahren nach einem der vorhergehenden Ansprüche, **dadurch gekennzeichnet, dass** aus den erfassten Werten der Messgröße(n) und einer an sich bekannten Geometrie und an sich bekannten Materialeigenschaften des Werkzeuges sowie einer bekannten Positionierung des Werkezeuges in der Werkzeugaufnahme rechnerisch auf Ausweichbewegungen und/oder Verformungen des Werkzeuges an der Position von Bearbeitungsabschnitten geschlossen wird, um so einen Bearbeitungsprozess auf durch Werkzeugverformungen entstehende Maßabweichungen zu überprüfen.

12. Verfahren nach einem der vorhergehenden Ansprüche, **dadurch gekennzeichnet, dass** zumindest die Werte für das die Biegemomente nach deren Betrag und/oder Richtung bestimmt und im Hinblick auf ein als in Betrag und/oder Richtung als maximal zulässig definiertes Grenzbiegemoment in Vergleich gestellt werden, wobei insbesondere bei einer Überwachung des Bearbeitungswerkzeuges das Grenzbiegemoment als ein solches festgelegt wird, das bei einem maximal zulässig verschlissenen Werkzeug auftritt.

13. Verfahren nach einem der vorhergehenden Ansprüche, **dadurch gekennzeichnet, dass** zumindest die Werte für die Axialkraft bestimmt und im Hinblick auf eine als maximal zulässig definierte Grenzaxialkraft in Vergleich gestellt werden.

14. Verfahren nach Anspruch 13, **dadurch gekennzeichnet, dass** bei einer Überwachung des Bearbeitungsprozesses die Grenzkraft als eine solche festgelegt wird, die bei einem maximal zulässig verschlissenen Werkzeug auftritt.

15. Verfahren nach einem der vorhergehenden Ansprüche, **dadurch gekennzeichnet, dass** für die Einrichtung der Betriebsparameter und/oder für die Überwachung der Betriebsparameter unter Rückgriff auf Daten zu der Geometrie und der Materialbeschaffenheit eines Werkzeuges sowie der Positionierung desselben in der Werkzeugaufnahme sowie ferner unter Berücksichtigung von Daten über die Geometrie und Materialbeschaffenheit eines zu bearbeitenden Werkstücks aus den erfassten Werten für die wenigstens eine Messgröße bei dem Bearbeitungsprozess tatsächlich auftretende normierte Zerspankräfte ermittelt und diese mit für das Werkzeug herstellerseitig angegebenen zulässigen und/oder empfohlenen Werten für die Belastung des Werkzeuges verglichen werden, um unter Berücksichtigung dieses Abgleichs die Betriebsparameter im Hinblick auf Werkzeugverschleiß und/oder Zerspanvolumen zu optimieren.

## Claims

1. A method for setting up and/or monitoring operating parameters of a workpiece processing machine, which has a tool holder and means for relatively moving a workpiece and the tool holder with respect to one another along a first axis, wherein during the machining operation of the tool holder equipped with a tool and when engaging the tool into a workpiece, values for at least one of the following measured variables occurring at the tool holder during interaction between the tool and the workpiece on the tool and transmitted to the tool holder are detected and recorded for the sequence of processing :
bending moments or bending torque components according to the direction and the magnitude,
wherein the determined values for said at least one measured variable are used in order to set up the operating parameters so as to extend the service life of the tool used, without exceeding the maximum machining time and/or to monitor the machining process in terms of reproducibility and/or a tool wear and/or a machine error of the workpiece processing machine, **characterized in that** the magnitude values and directions for the measured variables of the bending moments and/or bending torque components are detected in a plane which is perpendicular to the first axis, stationary with respect to the tool holder when said tool holder is rotating, which plane revolves with said tool holder, whereas the coordinate system is stationary with respect to said tool holder and that a plurality of values of the bending moments or bending torque components, each of which is acquired at a predetermined measuring time t, are plotted in a two-dimensional coordinate diagram for the evaluation.

2. The method according to claim 1, **characterised in that** in addition to the bending moments or bending torque components according to direction and magnitude as further measured variable(s)
b. a torque applied with respect to the first axis or an axis parallel thereto and/or
c. an axial force acting in the direction parallel to the first axis are recorded.

3. The method according to claim 2, **characterised in that** the tool holder is rotationally driven about the first axis or a rotational axis parallel to the first axis, wherein, provided that values for the measured variable b. are detected, the torque is detected in relation to the rotational axis.

4. The method according to one of the preceding claims, **characterised in that** the magnitude values and directions for the measured variables of the bending moments and/or bending torque components are detected in two directions, mutually perpendicular, i.e. in a direction perpendicular to the first axis, stationary with respect to the tool holder, on a plane revolving with the rotating tool holder, said directions being stationary with respect to said tool holder, i.e. an x-direction and a y-direction, and that for the evaluation, a plurality of values composed respectivement of pairs of values resulting from bending moments or bending torque components, detected at a predetermined measuring time t, in the x-direction and the y-direction, are plotted in a two-dimensional, rectangular coordinate diagram with the values in the x-direction along a first coordinate axis and the values in y-direction along a second coordinate axis as illustration points.

5. Method according to one of the preceding claims, **characterised in that** pairs of values are illustrated in the coordinate diagram, within a time interval Δt1, with a sampling rate that is significantly smaller than the time interval Δt1, during which time interval Δt1 a sufficient quantity of data is recorded to produce a meaningful illustration, that, after the end of the time interval Δt1, additional pairs of values are illustrated within a further time interval Δt2 having a sampling rate that is significantly smaller than the time interval Δt2, during which time interval Δt2 a sufficient quantity of data is recorded to produce a meaningful illustration in a new coordinate diagram and that the successive illustrations are compared to determine a dynamic development of operating conditions, in particular the tool condition.

6. The method according to one of the preceding claims, **characterised in that** loads applied on individual peripheral portions of a tool rotating and driven around a rotational axis, arranged in the tool holder, are read out on the basis of the illustrations in the coordinate diagram, whereas a tool holder is rotating.

7. The method according to claim 6, **characterised in that** an adjustment of the method is performed, when setting up the machining process based on the illustration in the coordinate diagram, an adjustment which enables to reduce the loads which can be read out in the coordinate diagram and are applied on the individual peripheral sections of the rotating tool by changing the operating parameters.

8. A method according to claim 6, **characterised in that** changes in the forces acting on the individual peripheral portions loads are observed when monitoring the machining process and the wear level of the tool can be assessed consequently, wherein a message prompting to replace the tool is issued upon reaching a predetermined critical wear level.

9. Method according to one of claims 1 to 6, **characterised in that** an anomaly in the machining process can be pointed out and a corresponding warning isused, on the basis of the deviations, in particular asymetrical deviations from the expected image of the measuring points in the coordinate diagram.

10. A method according to any of the preceding claims, **characterised in that** values recorded for corresponding reference processes and values recorded in a coordinate diagram or illustrating the vector sum as a function of time are calibrated so as to monitor the operating parameters of the processing machine based on the illustrations of the values recorded for corresponding reference processes and values recorded in a coordinate diagram or illustrating the vector sum as a function of time, in order to detect a change in the process at an early stage.

11. A method as claimed in one of the preceding claims, **characterised in that** evasive movements and/or deformations of the tool in certain parts of the machining process can be concluded mathematically, on the basis of detected values of the measured variable(s) and of geometry and material properties known per, as well as of the known positioning of the tool in the tool holder, so as to check a machining process for dimensional deviations resulting from tool deformations.

12. The method as claimed in one of the preceding claims, **characterised in that** at least the values for which the bending moments are determined according to their magnitude and/or direction and compared in the context of a defined limit bending torque in terms of maximum admissible amount and/or direction, wherein in particular when monitoring the machining tool, the limit bending torque is set as a torque that occurs when the tool wear reaches a maximum admissible value.

13. The method as claimed in one of the preceding claims, **characterised in that** at least the values for the axial force are determined and compared with respect to a limit axial force defined as maximum admissible.

14. The method of claim 13, **characterised in that**, when monitoring the machining process, the limit force is set as a force which occurs when the tool wear reaches a maximum admissible value.

15. The method as claimed in one of the preceding claims, **characterized in that** cutting forces actually taking place can be determined on the basis of the values detected for at least one measured variable during the machining process for setting up the operating parameters and/or for monitoring the operating parameters by resorting to data on the geometry and the material properties of a tool and its positioning in the tool holder and further taking into account data about the geometry and material properties of a workpiece to be machined and these are compared with admissible and/or recommended values for the load of the tool specified by the manufacturer of the tool, In order to optimise the operating parameters with regard to tool wear and/or machining volume in consideration of this calibration.

## Revendications

1. Procédé destiné au réglage et/ou à la surveillance des paramètres de fonctionnement d'une machine d'usinage de pièces, qui comporte un porte-outil et des moyens pour déplacer de manière relative une pièce et le porte-outil l'un par rapport à l'autre le long d'un premier axe, dans lequel pendant l'opération d'usinage du porte-outil équipé d'un outil et lors de l'engagement de l'outil dans une pièce, des valeurs concernant au moins l'une des grandeurs mesurées suivantes sur le porte-outil pendant l'interaction entre l'outil et la pièce sur l'outil et transmis au porte-outil sont détectées et enregistrées pour la séquence d'usinage :
les couples de flexion ou les composantes de couple de flexion en fonction de la direction et de l'amplitude,
dans lequel les valeurs déterminées pour ladite au moins une variable mesurée sont utilisées pour régler les paramètres de fonctionnement de façon à prolonger la durée de vie de l'outil utilisé, sans dépasser le temps d'usinage maximal et/ou surveiller le processus d'usinage dans conditions de reproductibilité et/ou l'usure de l'outil et/ou l'erreur de la machine d'usinage de la pièce, **caractérisé en ce que** les valeurs d'amplitude et les directions pour les variables mesurées des couples de flexion et/ou des composantes de couple de flexion sont détectées dans un plan qui est perpendiculaire au premier axe, fixe par rapport au porte-outil lorsque ledit porte-outil est en rotation, plan qui tourne avec ledit porte-outil, tandis que le système de coordonnées est fixe par rapport audit porte-outil et **en ce qu'**une pluralité de valeurs des couples de flexion ou des composantes de couple de flexion, dont chacune est acquise à un instant de mesure prédéterminé t, sont tracées dans un diagramme de coordonnées bidimensionnel pour l'évaluation.

2. Procédé selon la revendication 1, **caractérisé en ce que**, en plus des couples de flexion ou des composantes de couple de flexion, en fonction de la direction et de l'amplitude, en tant que variable(s) de mesure supplémentaire(s)
b. un couple appliqué par rapport au premier axe ou à un axe parallèle à celui-ci et/ou
c. une force axiale agissant dans la direction parallèle au premier axe sont consignés.

3. Procédé selon la revendication 2, **caractérisé en ce que** le porte-outil est entraîné en rotation autour du premier axe ou d'un axe de rotation parallèle au premier axe, dans lequel, à condition que les valeurs de la variable mesurée b. soient détectés, le couple est détecté par rapport à l'axe de rotation.

4. Procédé selon l'une des revendications précédentes, **caractérisé en ce que** les valeurs d'amplitude et les directions des variables de mesure des couples de flexion et/ou des composantes de couple de flexion sont détectées dans deux directions perpendiculaires, c'est-à-dire perpendiculaires au premier axe, stationnaire par rapport au porte-outil, sur un plan tournant avec le porte-outil rotatif, lesdites directions étant fixes par rapport audit porte-outil, c'est-à-dire dans une direction x et une direction y, et que pour l'évaluation, une pluralité de valeurs composées de paires de valeurs résultant de couples de flexion ou de composantes de couple de flexion, détectées à un instant de mesure prédéterminé t, dans la direction x et la direction y, sont tracées dans un diagramme de coordonnées dimensionnel rectangulaire avec les valeurs dans la direction x le long d'un premier axe de coordonnées et les valeurs dans la direction y le long d'un second axe de coordonnées comme points d'illustration.

5. Procédé selon l'une quelconque des revendications précédentes, **caractérisé en ce que** des paires de valeurs sont illustrées dans le diagramme de coordonnées, dans un intervalle de temps Δt1, avec une fréquence d'échantillonnage qui est sensiblement plus petit que l'intervalle de temps Δt1, au cours de laquelle l'intervalle de temps Δt1, une quantité suffisante de données est enregistrée pour produire une illustration significative, après la fin de l'intervalle de temps Δt1, des paires supplémentaires de valeurs sont illustrées dans un autre intervalle de temps Δt2 ayant une fréquence d'échantillonnage significativement plus petite que l'intervalle de temps Δt2, pendant laquelle un intervalle de temps suffisant Δt2 est enregistré pour produire une illustration significative dans un nouveau diagramme de coordonnées et que les illustrations successives sont comparées pour déterminer un développement dynamique des conditions de fonctionnement, en particulier de la condition de l'outil.

6. Procédé selon l'une des revendications précédentes, **caractérisé en ce que** des charges appliquées sur des parties périphériques individuelles d'un outil tournant et entraîné autour d'un axe de rotation, agencées dans le porte-outil, sont lues sur la base des illustrations du schéma de coordonnées, alors qu'un porte-outil est en rotation.

7. Procédé selon la revendication 6, **caractérisé en ce qu'**un réglage du procédé est effectué lors de la mise en place du processus d'usinage sur la base de l'illustration dans le diagramme de coordonnées, réglage qui permet de réduire les charges qui peuvent être lues dans le diagramme de coordonnées et qui sont appliquées sur les différentes sections périphériques de l'outil rotatif en modifiant les paramètres de fonctionnement.

8. Procédé selon la revendication 6, **caractérisé en ce que** l'on observe des modifications des forces agissant sur les charges périphériques individuelles lors de la surveillance du processus d'usinage. et le niveau d'usure de l'outil peut être évalué en conséquence, dans lequel un message invitant à remplacer l'outil est émis lorsqu'un niveau d'usure critique prédéterminé est atteint.

9. Procédé selon l'une des revendications 1 à 6, **caractérisé en ce qu'**une anomalie dans le processus d'usinage peut être signalée et un avertissement correspondant est utilisé, sur la base des écarts, notamment des écarts asymétriques par rapport à l'image attendue des points de mesure dans le diagramme de coordonnées.

10. Procédé selon l'une quelconque des revendications précédentes, **caractérisé en ce que** les valeurs enregistrées pour les processus de référence correspondants et les valeurs enregistrées dans un diagramme de coordonnées ou illustrant la somme vectorielle en fonction du temps sont calibrées pour surveiller les paramètres de fonctionnement de la machine d'usinage à partir des illustrations des valeurs enregistrées pour les processus de référence correspondants et des valeurs enregistrées dans un diagramme de coordonnées ou illustrant la somme de vecteurs en fonction du temps, afin de détecter un changement dans le processus à un stade précoce.

11. Procédé selon l'une des revendications précédentes, **caractérisé en ce que** des mouvements d'évitement et/ou des déformations de l'outil dans certaines parties du processus d'usinage peuvent être conclus mathématiquement, sur la base des valeurs détectées de la (des) variable(s) mesurée(s) et des propriétés géométriques et le positionnement connu de l'outil dans le porte-outil, afin de rechercher, dans le processus d'usinage, les écarts dimensionnels résultant des déformations de l'outil.

12. Procédé selon l'une des revendications précédentes, **caractérisé en ce qu'**au moins les valeurs pour lesquelles les couples de flexion sont déterminés en fonction de leur amplitude et/ou de leur direction et comparées dans la perspective d'un couple limite de flexion défini en termes de quantité et/ou direction maximale admissible, dans lequel, en particulier lors de la surveillance de l'outil d'usinage, le couple limite de flexion est réglé comme un couple qui se produit lorsque l'usure de l'outil atteint une valeur maximale admissible.

13. Procédé selon l'une des revendications précédentes, **caractérisé en ce qu'**au moins les valeurs de la force axiale sont déterminées et comparées par rapport à une force axiale limite définie comme maximale admissible.

14. Procédé de la revendication 13, **caractérisé en ce que**, lors de la surveillance du processus d'usinage, la force limite est définie comme une force qui se produit lorsque l'usure de l'outil atteint une valeur maximale admissible.

15. Procédé selon l'une des revendications précédentes, **caractérisé en ce que** les forces de coupe effectives peuvent être déterminées sur la base des valeurs détectées pour au moins une grandeur mesurée pendant le processus d'usinage pour le réglage des paramètres de fonctionnement et/ou pour surveiller les paramètres de fonctionnement en utilisant des données géométriques et les propriétés matérielles d'un outil et son positionnement dans le porte-outil et en tenant également compte des données sur la géométrie et les propriétés des matériaux d'une pièce à usiner et ceux-ci sont comparées aux valeurs admissibles et/ou recommandées pour la charge de l'outil spécifiée par le fabricant de l'outil, afin d'optimiser les paramètres de fonctionnement en ce qui concerne l'usure de l'outil et/ou le volume d'usinage en tenant compte de cet étalonnage.
